# EUROPÄISCHE PATENTSCHRIFT

(11) **EP 1 550 819 B1**
(45) Veröffentlichungstag und Bekanntmachung des Hinweises auf die Patenterteilung: **28.08.2013**
(21) Anmeldenummer: 04100007.6
(22) Anmeldetag: 05.01.2004
(51) Int. Cl.: F16G 13/04, F16G 13/06

(54) **Geräuschgedämpfte Kette**
Noise damping chain
Chaîne à amortissement de bruit

(43) Veröffentlichungstag der Anmeldung: 06.07.2005
(73) Patentinhaber: Ford Global Technologies, LLC, A subsidary of Ford Motor Company, Dearborn, MI 48126 (US)
(72) Erfinder: Kluge, Torsten, Dr., 51491 Overath (DE)
(74) Vertreter: Drömer, Hans-Carsten

(56) Entgegenhaltungen:
- GB-A- 411 774
- US-A- 2 248 189
- US-A- 5 140 806
- US-A- 5 464 374
- US-B1- 6 330 788

## Beschreibung

Die Erfindung betrifft eine Kette gemäß dem Oberbegriff des Anspruchs 1, die Kettenglieder aufweist, die mittels einander zugeordneten Verbindungselementen zu einer Endloskette zusammengefasst sind wobei eines der Verbindungselemente als Kettenbolzen von dem anderen Verbindungselement, welches als Öffnung in den Kettengliedern eingebracht ist, aufgenommen ist. Das eine Verbindungselement weist einen im Querschnitt gesehen unrunden Umfang auf, wobei das diesem zugeordnete Verbindungselement einen im Querschnitt gesehen runden Umfang aufweist, so daß in einem Betriebszustand der Kette ein Flächenkontakt zwischen den Verbindungselementen besteht, wobei das im Querschnitt gesehen runde Verbindungselement als Öffnung in den Kettengliedern ausgestaltet ist, und wobei das im Querschnitt gesehen unrunde Verbindungselement der Kettenbolzen ist.

Derartige Ketten sind bekannt. In der Automobilindustrie werden diese Ketten als Transmissionsketten beispielsweise als Rollenketten, Buchsenketten oder sogenannte Silentketten (verzahnte Ketten) eingesetzt. Die Verbindungselemente sind üblicher weise zum einen als Kettenbolzen und zum anderen als Öffnung ausgestaltet, wobei die Öffnung in Kettengliedern wie Rollen, Laschen oder dergleichen eingebracht ist.

Aus der US 2,248,189 ist eine gattungsgemäße Kette bekannt.

In der US 5,423,724 ist eine Schwenkverbindung für eine Kette, die aus einer Einheit von Kettengliedern und Drehelementen besteht offenbart. Die Kette weist eine Vielzahl von Sätzen von verschachtelten Gliedern auf, wobei benachbarte Sätze verschachtelt sind und jedes Glied ein Paar von beabstandeten Öffnungen aufweist. Die Öffnungen sind durch eine Reihe von Flächen gebildet, wobei mindestens einige der Glieder eine konvex gekrümmte Fläche besitzen und ein Satz von Öffnungen eines Gliedsatzes in Querrichtung zu einem Satz von Öffnungen des nächsten benachbarten Gliedsatzes ausgerichtet ist. Mindestens eines der Drehelemente weist eine Vorderseite und eine konvexe Rückseite auf, die von einer Vielzahl von Radien gebildet wird. Das Drehelement ist derart in den Öffnungen von einigen der Glieder angeordnet, daß die Vorderseite des Drehelementes und die konvex gekrümmte Fläche der Gliedöffnung miteinander in Eingriff stehen und aufeinander abrollen, während die Rückseite des Drehelementes mit Spiel zur Rückseite der Öffnung im gespannten Kettenstrang angeordnet ist, wenn sich die Flächen relativ zueinander bewegen, bevor die Kette verschwenkt wird.

Die US 5,423,724 betrifft aber auch eine Kraftübertragungskette, die aus einer Einheit aus Kettengliedern und Drehelementen besteht. Die Kraftübertragungskette weist eine Vielzahl von Sätzen von Führungsgliedern auf, die mit Sätzen von Innengliedern verschachtelt sind, wobei benachbarte Sätze von Innengliedern verschachtelt sind und jedes Glied ein Paar von beabstandeten Öffnungen aufweist, die durch eine Reihe von Flächen gebildet sind. Die Öffnungen eines Gliedsatzes sind in Querrichtung zu einem Satz von Öffnungen des nächsten benachbarten Gliedsatzes ausgerichtet. Die Öffnungen besitzen innerhalb der Führungsglieder mindestens eine gekrümmte Fläche. Die Öffnungen weisen innerhalb von mindestens einigen der Innenglieder eine Vielzahl von konvex gekrümmten Flächen auf. Die Drehelemente weisen eine Vorderseite und eine konvexe Rückseite auf, die durch eine Vielzahl von Radien gebildet ist. Die Drehelemente sind derart in den Öffnungen der Führungsglieder angeordnet, daß die Rückseite des Drehelementes mit der vom Führungsglied gebildeten gekrümmten Fläche in Eingriff steht und auf diese Weise eine wesentliche Drehung des Drehelementes relativ zum Führungsglied verhindert. Das Drehelement ist ferner derart in den Öffnungen von mindestens einigen der Innenglieder angeordnet, daß die Vorderseite des Drehelementes und eine konvex gekrümmte Fläche der Innengliedöffnungen miteinander in Eingriff stehen und aufeinander abrollen und die Rückseite des Drehelementes mit Spiel zur Rückseite der Öffnung im gespannten Kettenstrang angeordnet ist, wenn sich die Flächen relativ zueinander bewegen, bevor die Kette verschwenk wird.

Ferner betrifft die US 5,423,724 eine Kraftübertragungskette zur Verwendung mit einem Kettenrad.

Die US 5,562,559 betrifft ein Kippgelenk für eine Kraftübertragungskette, die aus Laschen und Bolzen besteht. Die Kette besteht aus mehreren jeweils verschachtelten Sätzen von Laschen. Jede Lasche weist Endabschnitte und einen mittleren Teil mit zwei beabstandeten Öffnungen auf. Die Kippgelenke sind in Form zweier Bolzen vorgesehen. Jeder Bolzen weist eine kreisbogenförmige Kippfläche, eine kreisbogenförmige Sitzfläche gegenüber der Kippfläche und zwei Seitenflächen zur Verbindung der Kippfläche mit der Sitzfläche auf. Die Sitzfläche ist konzentrisch mit der Kippfläche. Die Bolzenseitenfläche ist mit einem Kreisbogen versehen, dessen Mittelpunkt außerhalb des Bolzens liegt. Jede Öffnung weist eine kreisbogenförmige Tragfläche auf, die am Endteil der Lasche liegt, und die kreisbogenförmig zur Abstützung der Sitzfläche des Bolzens dient. Die Öffnung weist eine Haltefläche auf, die mit der Tragfläche verbunden ist, und der Seitenfläche des zugehörigen Bolzens zugekehrt ist. Der Krümmungsmittelpunkt der Haltefläche liegt außerhalb der Öffnung. Die Öffnung weist eine gekrümmte Fläche auf, die zur Verbindung der Halteflächen dient.

Auch die US 5,700,217 offenbart eine Kraftübertragungskette mit einer Vielzahl an Reihen verschachtelter Glieder. Jedes Glied weist ein Paar Öffnungen auf. Die Glieder sind mittels Bolzen als Schwenkelement miteinander verbunden. Die Schwenkelemente weisen einen runden Umfang auf. Einige der Reihen sind Führungsreihen, die auf ihrer äußersten Seite Führungsglieder aufweisen. Die Öffnung in jedem Glied von zumindest einer Gliederreihe einer Führungsreihe und einer Nichtführungsreihe weist eine nahezu d-förmige Ausgestaltung auf. Die d-förmige Öffnung weist eine nahezu halbkreisförmige Fläche und eine ebene Fläche auf, die beide Enden der halbkreisförmigen Fläche miteinander verbindet. Die d-förmige Öffnung weist eine nahezu halbkreisförmige Buchse auf, die in die Öffnung eingelegt ist. Die Buchse koinzidiert mit der halbkreisförmigen Fläche der d-förmigen Öffnung.

Ein Hauptnachteil bei derzeitigen Ketten ist darin zu sehen, daß die Ausgestaltung der Verbindungselemente, beispielsweise eine Anfangskettengliedlänge und das Bolzenspiel einen Haupteinfluß auf einen Polygoneffekt haben, wobei ein stoßförmiger Kontakt der Kette mit einem Zahngrund eines Kettenrades auftritt, wodurch erhebliche Lärmprobleme z. B. als Kettenheulen wahrnehmbar sind.

Nachteilig ist weiterhin, daß eine breite hertzsche Pressung der Verbindungselemente untereinander auftritt, die einen Linienkontakt zwischen beiden Komponenten bewirkt. Hierdurch wird der Verschleiß der Kette erheblich erhöht. Zudem sind die einzelnen Verbindungselemente höchst kompliziert herzustellen, wodurch die Ketten sehr kostenintensiv in der Anschaffung sind.

Nachteilig ist weiterhin, daß eine breite hertzsche Pressung der Verbindungselemente untereinander auftritt, die einen Linienkontakt zwischen beiden Komponenten bewirkt. Hierdurch wird der Verschleiß der Kette erheblich erhöht. Zudem sind die einzelnen Verbindungselemente höchst kompliziert herzustellen, wodurch die Ketten sehr kostenintensiv in der Anschaffung sind.

Der vorliegenden Erfindung liegt die Aufgabe zugrunde, eine verbesserte Kette der Eingangs genannten Art zur Verfügung zu stellen, bei der mit einfachen Mitteln eine Geräuschminderung erzielt wird, wobei die Lebensdauer der Kette gleichzeitig erhöht wird.

Erfindungsgemäß wird die Aufgabe durch eine Kette mit den Merkmalen des Anspruchs 1 gelöst.

Um eine breite hertzsche Pressung zu vermeiden weist, erfindungsgemäß, in einer Mittelstellung der beiden Verbindungselemente einer der beiden Kreisabschnitte einen ersten Mittelpunkt auf, der in Längsrichtung gesehen zu einem Mittelpunkt des im Querschnitt gesehenen runden Verbundselementes versetzt ist, wobei der andere Kreisabschnitt einen zweiten Mittelpunkt aufweist, der bezogen auf den Mittelpunkt des im Querschnitt gesehenen runden Verbindungselementes in Längsrichtung gesehen diametral gegenüberliegend zum ersten Mittelpunkt angeordnet ist. Das im Querschnitt gesehen unrunde Verbindungselement weist zwei gleiche Radien auf. Die beiden Kreisabschnitte weisen zum einen einen Zugradius und zum anderen einen Druckradius auf, die einen gleichen Betrag aufweisen. Erfindungsgemäß wird ein zusätzliches Spiel zwischen den beiden Verbindungselementen erzeugt, so daß im Betriebszustand der Kette näherungsweise ein Flächenkontakt zwischen den beiden Verbindungselementen erzeugt wird. Vorteilhaft wird so eine niedrige hertzsche Pressung erreicht, die vorteilhaft einen geringeren Verschleiß der Kette bewirkt.

Durch das Spiel, insbesondere mittels des vorteilhaften Flächenkontaktes wird aber auch günstiger Weise bewirkt, daß ein Kontakt der Kette vorzugsweise an einer Zahnflanke eines Kettenrades auftritt, wodurch die Kette im Betriebszustand wesentlich leiser läuft, auch wenn die Kette neu ist.

Erfindungsgemäß ist das eine der Verbindungselemente ein Kettenbolzen. Dieser ist in dem anderen Verbindungselement, das als Öffnung in einem Kettenglied beispielsweise einer Rolle, Lasche oder dergleichen ausgebildet ist, verdrehsicher aufgenommen. Durch das Spiel wird eine selbsteinstellbare Kette zur Verfügung gestellt, indem der Kettenbolzen je nach Belastung in Längsrichtung gesehen hin- und herwandert.

Günstig im Sinne der Erfindung ist, wenn der Kettenbolzen aus einem Vollkörper besteht, der die beiden Kreisabschnitte aufweist.Erfindungsgemäß weist die Öffnung dann eine Innenwandung auf, die den im Querschnitt gesehen runden Umfang aufweist. Der Kettenbolzen ist einstückig hergestellt.

Die beiden Kreisabschnitte sind derart in einer Hochachse angeordnet, daß das im Querschnitt gesehen unrunde Verbindungselement einen im Wesentlichen elliptisch gebildeten Querschnitt aufweist. Zweckmäßig ist, wenn Verbindungsbereiche der beiden Kreisabschnitte bei der Herstellung gebrochen werden, um einen entsprechenden Übergang der beiden Kreisabschnitte zu erreichen.

Üblicher Weise verbiegt sich der Kettenbolzen im Betriebszustand der Kette, also bei Belastung. Von daher kann zweckmäßiger Weise vorgesehen sein, daß der Kettenbolzen in Querrichtung gesehen einen sich ändernden Querschnitt aufweist, welcher der zu erwartenden Biegelinie gegenwirkt. Damit wird vorteilhaft sichergestellt, daß eine Kontaktzone des Kettenbolzens an der Innenwand der Öffnung immer optimal anliegt.

Der Kettenbolzen wird beispielhaft mittels Plattwalzung hergestellt.

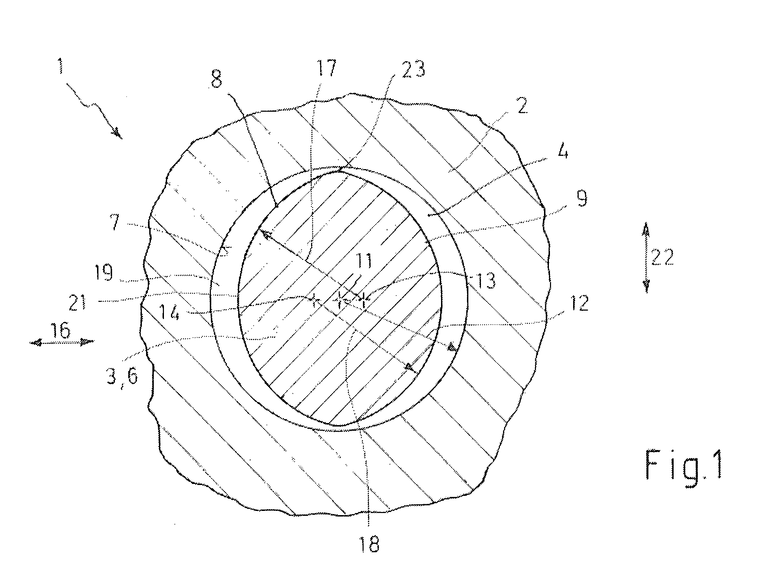

Weitere Vorteilhafte Ausgestaltungen der Erfindung sind im abhängigen Anspruch und der folgenden Figurenbeschreibung offenbart. Es zeigt die einzige
Fig. 1 einen Teilquerschnitt durch ein Kettenglied.

Figur 1 zeigt einen Teilquerschnitt durch ein Kettenglied 1 mit zwei einander zugeordneten Verbindungselementen 2, 3. Das Kettenglied 1 ist Bestandteil einer Endloskette wie diese beispielsweise in der Fahrzeugindustrie zur Kraftübertragung eingesetzt wird. Die Endloskette weist eine Vielzahl von Kettengliedern auf, die mittels der Verbindungselemente 2, 3 miteinander verbunden sind. Hierzu ist in den Kettengliedern 1 als ein erstes Verbindungselement 2 eine Öffnung 4 zur Aufnahme des zweiten Verbindungselementes 3, welches ein Kettenbolzen 6 ist, eingebracht. In der jeweiligen Öffnung 4 ist jeweils ein einzelner Kettenbolzen 6 aufgenommen

Die Öffnung 4 weist einen im Querschnitt gesehen runden Umfang an ihrer Innenwand 7 auf. Der Kettenbolzen 6 weist zwei Kreisabschnitte 8, 9 derart auf, daß dieser einen im Querschnitt gesehen unrunden Umfang aufweist.

Figur 1 zeigt die beiden Verbindungselemente 2, 3 in einer Mittelstellung. Der Kettenbolzen 6 ist verdrehsicher in der Öffnung 4 aufgenommen. Die Öffnung 4 ist in üblichen Kettengliedern 1 wie beispielsweise Rollen, Laschen oder dergleichen als Langloch eingebracht.

Die Öffnung 4 weist einen Mittelpunkt 11 und einen Radius 12 auf. Die beiden Kreisabschnitte 8, 9 des Kettenbolzens 6 weisen jeweils einen Mittelpunkt 13 bzw. 14 auf. Der erste Kreisabschnitt 8 ist mit seinem Mittelpunkt 13 in Längsrichtung 16 gesehen zum Mittelpunkt 11 der Öffnung 4 versetzt. Der zweite Kreisabschnitt 9 ist mit seinem Mittelpunkt 14 bezogen auf den Mittelpunkt 11 der Öffnung 4 in Längsrichtung 16 diametral gegenüberliegend zum Mittelpunkt 13 des ersten Kreisabschnittes 8 angeordnet und ebenfalls in Längsrichtung 16 zum Mittelpunkt 11 der Öffnung 4 versetzt. Die Längsrichtung 16 ist mittels eines Doppelpfeils dargestellt. Die Mittelpunkte 11, 13, bzw. 14 sind in der dargestellten Mittelstellung innerhalb des Kettenbolzens 6 angeordnet.

Die beiden Kreisabschnitte 8 bzw. 9 weisen jeweils einen Radius 17 bzw. 18 auf. Der Radius 17 des ersten Kreisabschnittes 8 wird beispielhaft als Zugradius bezeichnet, wobei der Radius 18 des zweiten Kreisabschnittes 8 beispielhaft als Druckradius bezeichnet wird. Der Zugradius weist einen Betrag auf, der gleich dem Betrag des Druckradius ist.

Der Radius 12 der Öffnung 4 weist einen Betrag auf, der gleich den Beträgen des Zug- bzw. Druckradius ist.

Zwischen der Innenwandung 7 der Öffnung 4 und dem Kettenbolzen 6 ist ein zusätzliches Spiel 19 gebildet, welches entsprechend der bogenförmigen Ausgestaltung der Kreisabschnitte 8 bzw. 9 von deren Zenit 21 entlang einer Hochachse abnimmt. Die Hochachse ist mittels des Doppelpfeils 22 dargestellt. An einem Verbindungsbereich 23 der beiden Kreisabschnitte 8 bzw. 9 ist das Spiel 19 am geringsten. In dem dargestellten Ausführungsbeispiel sind die jeweiligen Verbindungsbereiche 23 während der Herstellung des Kettenbolzens 6 gebrochen, so daß der Kettenbolzen 6 im Querschnitt gesehen näherungsweise eine elliptische Ausgestaltung aufweist. Der Kettenbolzen 6 ist vorzugsweise mittels Plattwalzung hergestellt.

Mittels der vorteilhaften Ausgestaltung des dargestellten Ausführungsbeispiels wird eine im Querschnitt gesehen unverminderte Tragfläche des Kettenbolzens 6 erreicht. Je nach Belastung der Kette wandert der Kettenbolzen 6 in der Öffnung 4 in Längsrichtung 16 hin und her, wodurch eine selbsteinstellbare Kette zur Verfügung gestellt wird. Die Kettenglieder 1 kontaktieren ein Zahnrad dabei bevorzugt an Zahnflanken. Damit wird eine geringe hertzsche Pressung erreicht, die sich vorteilhaft aus die Lebensdauer der Kette auswirkt. Zudem wird eine geräuschgedämpfte Kette zur Verfügung gestellt.

Die Erfindung ist nicht auf das beschriebene Ausführungsbeispiel beschränkt, sondern umfaßt auch alle Ausgestaltungen die unter den Wortlauf der Ansprüche fallen. Der Kettenbolzen 6 kann in Querrichtung unterschiedliche Umfänge aufweisen, um einer zu erwartenden Biegelinie Gegenzuwirken. Die Erfindung ist bei allen Ketten zur Kraftübertragung, insbesondere Rollenketten, Laschenketten oder Silentketten einsetzbar.

## Patentansprüche

1. Kette mit Kettengliedern (1), die mittels einander zugeordneten Verbindungselementen (2, 4; 3, 6) zu einer Endloskette zusammengefasst sind, wobei eines der Verbindungselemente (3, 6) als Kettenbolzen (6) von dem anderen Verbindungselement (2, 4), welches als Öffnung (4) in den Kettengliedern (1) eingebracht ist, aufgenommen ist, wobei der Kettenbolzen (6) einen im Querschnitt gesehen unrunden Umfang aufweist und die Öffnung (4), welche von dem Kettenbolzen (6) durchgriffen wird einen im Querschnitt gesehen runden Umfang aufweist, so daß in einem Betriebszustand der Kette ein Flächenkontakt zwischen den Verbindungselementen (2, 4; 3, 6) besteht,
**dadurch gekennzeichnet, daß**
der Kettenbolzen (6) mit zwei Kreisabschnitten (8, 9) derart ausgeführt ist, daß zwischen einer Innenwandung (7) der Öffnung (4) und dem Kettenbolzen (6) ein zusätzliches Spiel (19) gebildet ist, welches entsprechend der bogenförmigen Ausgestaltung der Kreisabschnitte (8, 9) von deren Zenit (21) entlang einer Hochachse (22) abnimmt und an einem Verbindungsbereich (23) der beiden Kreisabschnitte (8, 9) am geringsten ist, wobei der Kettenbolzen (6) verdrehsicher in der Öffnung (4) aufgenommen ist und je nach Belastung der Kette in Längsrichtung (16) des Kettengliedes (1) hin und her wandert,
der Kettenbolzen (6) zwei Radii (17; 18) von gleichem Betrag aufweist und die Öffnung (4) einen Radius (12) mit einem Betrag aufweist, der gleich den Beträge der Radii (17, 18) des Kettenbolzens (6) ist,
in einer Mittelstellung der beiden Verbindungselemente (2,4;3,6), einer der beiden Kreisabschnitte (8, 9) einen ersten Mittelpunkt (13) aufweist, der in Längsrichtung (16) des Kettengliedes (1) zu einem Mittelpunkt (12) der Öffnung (4) versetzt ist und der andere der beiden Kreisabschnitte (8, 9) einen zweiten Mittelpunkt (14) aufweist, der bezogen auf den Mittelpunkt (12) der Öffnung (4) in Längsrichtung des Kettengliedes (1) diametral gegenüberliege zum ersten Mittelpunkt (13) innerhalb des Kettenbolzens (6) angeordnet ist, und zum Mittelpunkt (12) der Öffnung (4) in Längsrichtung (16) des Kettengliedes (1) versetzt ist,
und daß die Verbindungsbereiche (23) der beiden Kreisabschnitte (8,9) gebrochen sind, sodaβ der Kettenbolzen (6) im Querschnitt gesehen näherungsweise eine elliptische Ausgestaltung aufweist.

2. Kette nach Anspruch 1,
**dadurch gekennzeichnet, daß**
der Kettenbolzen (6) in Querrichtung einen sich ändernden Querschnitt aufweist.

## Claims

1. Chain having chain links (1) which are combined by means of connecting elements (2, 4; 3, 6) which are assigned to one another in order to produce an endless chain, one of the connecting elements (3, 6) being received as chain pin (6) by the other connecting element (2, 4) which is made as an opening (4) in the chain links (1), the chain pin (6) having a circumference which is non-circular as viewed in cross section, and the opening (4) which is engaged through by the chain pin (6) having a circumference which is circular as viewed in cross section, with the result that there is a surface contact between the connecting elements (2, 4; 3, 6) in an operating state of the chain, **characterized in that** the chain pin (6) is configured with two circular sections (8, 9) in such a way that an additional play (19) is formed between an inner wall (7) of the opening (4) and the chain pin (6), which additional play (19), in accordance with the arcuate design of the circular sections (8, 9), decreases from its zenith (21) along a vertical axis (22) and is smallest at a connecting region (23) of the two circular sections (8, 9), the chain pin (6) being received in the opening (4) such that it cannot rotate and migrating to and fro depending on the loading of the chain in the longitudinal direction (16) of the chain link (1), the chain pin (6) having two radii (17; 18) of the same magnitude and the opening (4) having a radius (12) with a magnitude which is equal to the magnitudes of the radii (17, 18) of the chain pin (6), and, in a centre position of the two connecting elements (2, 4; 3, 6), one of the two circular sections (8, 9) having a first centre point (13) which is offset in the longitudinal direction (16) of the chain link (1) with respect to a centre point (12) of the opening (4), and the other of the two circular sections (8, 9) having a second centre point (14) which, in relation to the centre point (12) of the opening (4), is arranged so as to lie diametrically opposite the first centre point (13) within the chain pin (6) in the longitudinal direction of the chain link (1) and is offset in the longitudinal direction (16) of the chain link (1) with respect to the centre point (12) of the opening (4), and **in that** the connecting regions (23) of the two circular sections (8, 9) are broken, with the result that the chain pin (6) has approximately an elliptical design as viewed in cross section.

2. Chain according to Claim 1, **characterized in that** the chain pin (6) has a cross section which changes in the transverse direction.

## Revendications

1. Chaîne comprenant des maillons de chaîne (1) qui sont réunis au moyen d'éléments de liaison associés les uns aux autres (2, 4 ; 3, 6) pour former une chaîne sans fin, l'un des éléments de liaison (3, 6) étant reçu en tant que boulon de chaîne (6) par l'autre élément de liaison (2, 4), qui est réalisé sous forme d'ouverture (4) dans les maillons de chaîne (1), le boulon de chaîne (6) présentant un pourtour non circulaire vu en section transversale et l'ouverture (4), qui est traversée par le boulon de chaîne (6), présentant un pourtour circulaire vu en section transversale, de telle sorte que dans un état de fonctionnement de la chaîne, il existe un contact de surface entre les éléments de liaison (2, 4 ; 3, 6),
**caractérisée en ce que**
le boulon de chaîne (6) est réalisé avec deux portions de cercle (8, 9), de sorte qu'entre une paroi interne (7) de l'ouverture (4) et le boulon de chaîne (6) est formé un jeu supplémentaire (19), qui diminue en fonction de la configuration de forme arquée des portions de cercle (8, 9) depuis leur zénith (21) le long d'un axe vertical (22) et qui est minimal au niveau d'une région de liaison (23) des deux portions de cercle (8, 9), le boulon de chaîne (6) étant reçu de manière imperdable dans l'ouverture (4) et se déplaçant suivant un mouvement de va-et-vient en fonction de la sollicitation de la chaîne dans la direction longitudinale (16) du maillon de chaîne (1), le boulon de chaîne (6) présente deux rayons (17 ; 18) de même valeur, et l'ouverture (4) présente un rayon (12) d'une valeur égale aux valeurs des rayons (17, 18) du boulon de chaîne (6),
dans une position centrale des deux éléments de liaison (2, 4 ; 3, 6), l'une des deux portions de cercle (8, 9) présente un premier centre (13), qui est décalé dans la direction longitudinale (16) du maillon de chaîne (1) par rapport à un centre (12) de l'ouverture (4) et l'autre des deux portions de cercle (8, 9) présente un deuxième centre (14) qui est disposé par rapport au centre (12) de l'ouverture (4) à l'intérieur du boulon de chaîne (6) dans la direction longitudinale du maillon de chaîne (1) diamétralement en regard du premier centre (13), et qui est décalé par rapport au centre (12) de l'ouverture (4) dans la direction longitudinale (16) du maillon de chaîne (1), et **en ce que** les régions de liaison (23) des deux portions de cercle (8, 9) sont interrompues, de telle sorte que le boulon de chaîne (6), vu en section transversale, présente une configuration approximativement elliptique.

2. Chaîne selon la revendication 1,
**caractérisée en ce que**
le boulon de chaîne (6) présente une section transversale variable dans la direction transversale.
